# EUROPEAN PATENT SPECIFICATION

(11) **EP 1 209 516 B1**
(45) Date of publication and mention of the grant of the patent: **20.10.2004**
(21) Application number: 01309556.7
(22) Date of filing: 13.11.2001
(51) Int. Cl.: G03B 15/00, G08B 15/00, H04N 5/225

(54) **A camera**
Kamera
Caméra

(30) Priority: 14.11.2000 GB 0027742; 20.08.2001 GB 0120179
(43) Date of publication of application: 29.05.2002
(73) Proprietor: BRIDISCO LIMITED, London N17 7RQ (GB)
(72) Inventor: Gough, Keith Adrian, Prescot, Merseyside L34 0JE (GB)
(74) Representative: Ajello, Michael John

(56) References cited:
- US-A- 5 204 742
- US-A- 5 214 245
- US-A- 5 946 404
- PATENT ABSTRACTS OF JAPAN vol. 1996, no. 12, 26 December 1996 (1996-12-26) -& JP 08 205000 A (HITACHI DENSHI LTD), 9 August 1996 (1996-08-09)

## Description

THIS INVENTION concerns cameras, particularly, though not exclusively, the kind used for surveillance and mounted by way of a bracket on a wall, the camera housing being pivotally mounted on the bracket thus to be adjustable relative to the bracket.

Such cameras usually, but not necessarily, transmit video signals to a signal processor via an electrical cable connection and the cable is usually plugged into the camera housing often on a rear face thereof.

Where such cameras are to be used out of doors it is necessary for the cable connection to be weatherproof and thus, usually, permanent or removable only with difficulty.

It is an object of the present invention to provide a camera of this kind wherein the electrical cable connection is weatherproof and preferably removable.

According to the present invention, there is provided a camera comprising a housing, a supporting member, pivotal means for pivotally mounting the housing on the supporting member, and an electrical cable connection; characterised in that the electrical cable connection has a terminal jack-plug insertable through an aperture in the supporting member and a bore (15) provided through said pivotal means into the camera housing to make electrical contact with an electrical jack socket disposed within the housing, said socket being aligned with said aperture and said bore.

The camera housing may include an upright stem which is attached pivotally to the supporting member.

The pivotal attachment may be a universal swivel joint.

The jack plug and socket may each have four terminal connectors.

The supporting member may include means for retaining a part of the electrical cable horizontally, when the camera is positioned for use.

An embodiment of the invention will now be described, by way of example only, with reference to the accompanying drawings, in which:-
Fig. 1 illustrates, in perspective, a surveillance camera mounted on a wall bracket for pivotal connection relative thereto;
Fig. 2 is a view from beneath and to the rear of the camera and bracket and showing an electrical cable and its connection by a jack plug to the camera;
   and
Fig 3 is a view similar to Fig. 2 showing the cable connected.

Referring now to the drawings, a camera assembly 10 comprises a camera housing 11 mounted pivotally upon a wall bracket 9 attachable by screws (not shown) to an upright wall surface.

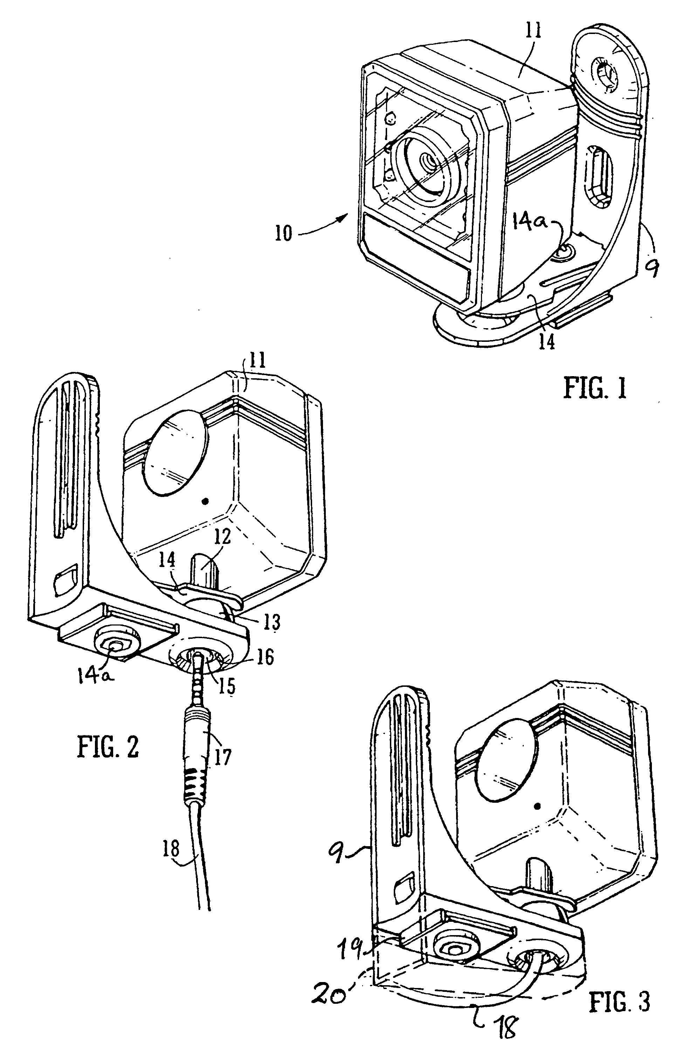

Referring now to Fig. 2, the housing 11 has an upright stem 12 in its lower region, which has at its lowermost end a ball 13 pivotally mounted universally on the bracket 9 by means for a fixing plate 14 which may be tightened by a screw 14a. Thus, the camera is pivotally mounted on the bracket by way of a universal joint thus to be adjustable about vertical and horizontal axes.

The electrical connection of the camera to a signal processor is afforded by way of an internal jack socket (not shown) having four electrical terminals for video and, if required, audio signal transmission, and the socket is aligned with the central upright axis of the stem 12 and ball 13 through which there is a bore 15 which in turn is aligned with an aperture 16 in the bracket 9. Thus, there is an open vertical passage through the bracket and the camera housing to the jack socket therewithin. Accordingly, a four terminal jack plug 17 may be passed upwardly through the bore to make electrical connection with the jack socket. In this way, the electrical terminals are rendered weatherproof, any rainwater draining downwardly away therefrom, while the jack plug 17 may be removed readily if and when required.

As can be seen from Fig. 3, for convenience and for support, the cable 18 may be led away in a generally horizontal direction and the bracket includes a threaded member 19 on its underside to which may be slidably attached a housing 20 (shown dotted) to hold the cable 18 against the underside of the bracket so that the cable is supported and there are no trailing parts of the cable which may be fouled by passing objects. The housing 20 will have cut-outs to enable the cable to exit horizontally or vertically close to the wall.

Pivotal movement of the housing 11 and the bracket 9 are accommodated by the ball joint 13, 14, and there is sufficient clearance between the plug 17 and the surrounding wall of the bore 15 to permit such pivotal movement.

## Claims

1. A camera (10) comprising a housing (11), a supporting member (9), pivotal means (13) for pivotally mounting the housing on the supporting member, and an electrical cable connection (17, 18); **characterised in that** the electrical cable connection has a terminal jack-plug (17) insertable through an aperture (16) in the supporting member (9) and a bore (15) provided through said pivotal means into the camera housing (11) to make electrical contact with an electrical jack socket disposed within the housing, said socket being aligned with said aperture (16) and said bore (15).

2. A camera according to Claim 1, wherein the camera housing (11) includes an upright stem (12) which is attached pivotally to the supporting member (9).

3. A camera according to Claim 1, wherein the pivotal mounting of the housing on the supporting member is by way of a universal swivel joint (13).

4. A camera according to Claim 1, wherein the jack plug (17) and socket each have four terminal connectors.

5. A camera according to any preceding claim, wherein the supporting member (9) includes means (20) for retaining a part of the electrical cable connection (17, 18) horizontally when the camera is positioned for use.

6. A camera according to Claim 2, wherein the upright stem (12) connects the camera housing (11) to a ball (13) pivotally mounted universally on the supporting member (9) by means of a fixing plate (14), the supporting member, the fixing plate, the ball, the stem and the housing having mutually aligned apertures forming a bore (15) through which may be passed the jack plug (17) for connection to the jack socket.

## Patentansprüche

1. Kamera (10) mit einem Gehäuse (11), einem Tragteil (9), einer Schwenkeinrichtung (13) zum schwenkbaren Lagern des Gehäuses an dem Tragteil und einer elektrischen Kabelverbindung (17, 18); **dadurch gekennzeichnet, dass** die elektrische Kabelverbindung einen Anschlussstecker (17) hat, der durch eine Öffnung (16) in dem Tragteil (9) und durch eine Bohrung (15), die in der Schwenkeinrichtung vorgesehen ist, in das Kameragehäuse (11) einführbar ist, um elektrischen Kontakt mit einer elektrischen Buchse herzustellen, die in dem Gehäuse angeordnet ist, wobei die Buchse mit der Öffnung (16) und der Bohrung (15) ausgerichtet ist.

2. Kamera nach Anspruch 1, wobei das Kameragehäuse (11) einen aufrechten Schaft (12) aufweist, der an dem Tragteil (9) schwenkbar befestigt ist.

3. Kamera nach Anspruch 1, wobei das Gehäuse an dem Tragteil mit Hilfe eines Universaldrehgelenks (13) schwenkbar gelagert ist.

4. Kamera nach Anspruch 1, wobei der Stecker (17) und die Buchse jeweils vier Anschlussverbinder haben.

5. Kamera nach einem der vorhergehenden Ansprüche, wobei das Tragteil (9) eine Einrichtung (20) aufweist zum Horizontalhalten eines Teils der elektrischen Kabelverbindung (17, 18), wenn die Kamera zum Gebrauch positioniert ist.

6. Kamera nach Anspruch 2, wobei der aufrechte Schaft (12) das Kameragehäuse (11) mit einer Kugel (13) verbindet, die an dem Tragteil (9) mittels einer Fixierplatte (14) universell schwenkbar gelagert ist, wobei das Tragteil, die Fixierplatte, die Kugel, der Schaft und das Gehäuse gegenseitig ausgerichtete Öffnungen haben, die eine Bohrung (15) bilden, durch welche der Stecker (17) zur Verbindung mit der Buchse hindurchgeführt werden kann.

## Revendications

1. Caméra (10) comprenant un boîtier (11), un élément de support (9), un moyen de pivotement (13) permettant de monter de manière pivotante le boîtier sur l'élément de support, et une connexion par câble électrique (17, 18), **caractérisée en ce que** la connexion par câble électrique comprend une fiche de type borne jack (17) pouvant être insérée à travers une ouverture (16) dans l'élément de support (9) et un alésage (15) pratiqué à travers ledit moyen de pivotement jusque dans le boîtier de la caméra (11) de manière à assurer un contact électrique avec une prise jack électrique disposée dans le boîtier, ladite prise étant alignée avec ladite ouverture (16) et ledit alésage (15).

2. Caméra, selon la revendication 1, dans laquelle le boîtier de caméra (11) comprend une tige verticale (12) qui est fixée de manière pivotante à l'élément de support (9).

3. Caméra, selon la revendication 1, dans laquelle le montage pivotant du boîtier sur l'élément de support se fait par le biais d'un joint sphérique universel (13).

4. Caméra, selon la revendication 1, dans laquelle la fiche jack (17) et la prise possèdent chacune quatre connecteurs de type borne.

5. Caméra, selon l'une quelconque des revendications précédentes, dans laquelle l'élément de support (9) comprend un moyen (20) permettant de maintenir une partie de la connexion par câble électrique (17, 18) en position horizontale lorsque la caméra est en position d'utilisation.

6. Caméra, selon la revendication 2, dans laquelle la tige verticale (12) permet de connecter le boîtier de caméra (11) à une boule (13) montée de manière pivotante et universelle sur l'élément de support (9) par le biais d'une plaque de fixation (14), l'élément de support, la plaque de fixation, la boule, la tige et le boîtier comportant des ouvertures alignées les unes avec les autres et formant un alésage (15) à travers lequel peut être passée la fiche jack (17) pour la connexion à la prise jack.
